# EUROPÄISCHE PATENTSCHRIFT

(11) **EP 2 756 231 B1**
(45) Veröffentlichungstag und Bekanntmachung des Hinweises auf die Patenterteilung: **09.12.2015**
(21) Anmeldenummer: 12759668.2
(22) Anmeldetag: 06.09.2012
(51) Int. Cl.: F23R 3/00, F16B 5/02

(54) **SET ZUM LÖSBAREN BEFESTIGEN EINER HITZESCHILDPLATTE EINER GASTURBINE AN EINEM TELLERFEDERPAKET SOWIE ZUM FIXIEREN DES TELLERFEDERPAKETS UND VERFAHREN ZUM AUSTAUSCHEN EINER HITZESCHILDPLATTE EINER GASTURBINE**
SET FOR DETACHABLY FASTENING A HEAT SHIELD PLATE OF A GAS TURBINE TO A LAMINATED DISK SPRING AND FOR SECURING SAID LAMINATED DISK SPRING, AND METHOD FOR REPLACING A HEAT SHIELD PLATE OF A GAS TURBINE
KIT DE FIXATION AMOVIBLE D'UN PANNEAU DE PROTECTION THERMIQUE D'UNE TURBINE À GAZ SUR UN EMPILAGE DE RONDELLES ÉLASTIQUES ET DE FIXATION DE L'EMPILAGE DE RONDELLES-RESSORTS AINSI QUE PROCÉDÉ DE REMPLACEMENT D'UN PANNEAU DE PROTECTION THERMIQUE D'UNE TURBINE À GAZ

(30) Priorität: 09.11.2011 EP 11188375
(43) Veröffentlichungstag der Anmeldung: 23.07.2014
(73) Patentinhaber: Siemens Aktiengesellschaft, 80333 München (DE)
(72) Erfinder: BUSE, Christoph, 45149 Essen (DE); GRENDEL, Sabine, 46147 Oberhausen (DE); HARTMANN, Manfred, 45475 Mülheim an der Ruhr (DE); HENSCHEL, Elke, 45481 Mülheim an der Ruhr (DE); HOFMANN, Markus, 44581 Castrop-Rauxel (DE); JASPERS, Meike, 46117 Oberhausen (DE); KADJI, Arsène, Brice, 12167 Berlin (DE); KLEMKE, Thomas, 13625 Berlin (DE); KLUGE, Andre, 48249 Dülmen (DE); LENZE, Martin, 45359 Essen (DE); LINK, Marco, 46049 Oberhausen (DE); MÜLLER, Dirk, 45470 Mülheim a.d.Ruhr (DE); TENRAHM, Thomas-Dieter, 46535 Dinslaken (DE)
(86) Internationale Anmeldenummer: PCT/EP2012/067369
(87) Internationale Veröffentlichungsnummer: WO 2013/068147

(56) Entgegenhaltungen:
- EP-A1- 2 230 454
- EP-A2- 0 834 660
- WO-A1-98/13645
- WO-A1-2010/142510
- US-A- 4 043 239
- US-A1- 2007 041 808

## Beschreibung

Set zum lösbaren Befestigen einer Hitzeschildplatte einer Gasturbine an einem Tellerfederpaket sowie zum Fixieren des Tellerfederpakets und Verfahren zum Austauschen einer Hitzeschildplatte einer Gasturbine.

Gasturbinen mit Ringbrennkammern werden wegen der im Betrieb in den Ringbrennkammern herrschenden hohen Temperaturen üblicherweise mit metallischen Hitzeschildplatten verkleidet. Bestimmte Hitzeschildplatten werden dabei mit Gussschrauben befestigt. Die Hitzeschildplatte wird dabei nicht unmittelbar durch die Gussschraube mit einer Wandung oder sonstigen Trägerstruktur verschraubt, da die thermische Dehnung der metallischen Hitzeschildplatte zu mechanischen Verspannungen führen würde, die die Integrität der Hitzeschildplatte gefährdet. Stattdessen wird auf der Rückseite der Hitzeschildplatte ein Tellerfederpaket vorgesehen, das eine Tellerfeder und eine mit der Tellerfeder verbundene Druckplatte besitzt. Die Gussschraube wird in die Druckplatte durch die Hitzeschildplatte hindurch eingeschraubt. Das Tellerfederpaket stellt durch die Tellerfeder einen zum Befestigen der Hitzeschildplatte ausreichenden Anpressdruck sicher und gleicht die thermische Dehnung aus. Die Druckplatte wird durch einen Sicherungsring im Tellerfederpaket gegen ein Herausfallen gesichert. Dieser Sicherungsring wird nur benötigt, wenn die Gussschraube nicht in die Druckplatte eingeschraubt ist, also nur während Konstruktion und Wartung der Gasturbine.

Der beschriebene Aufbau hat sich ohne Fehlerfall über lange Zeit bewährt. Die Erfindung geht jedoch von der Annahme aus, dass ein Sicherungsring aufgrund von mechanischen und thermischen Belastungen im Betrieb brechen könnte. Dies könnte bei Lösen der Gussschraube - beispielsweise im Wartungsfall - dazu führen, dass Druckplatte und Tellerfeder in das Innere der Gasturbine fallen, von wo sie nur mit großem Aufwand und während eines unerwünscht langen Stillstandes der Gasturbine zu bergen wären.

Es ist daher Aufgabe der Erfindung, eine Möglichkeit zum sicheren Austauschen von Hitzeschildplatten von Gasturbinen zu bieten.

Ein erster Erfindungsaspekt führt daher ein Set zum lösbaren Befestigen einer Hitzeschildplatte einer Gasturbine an einem Tellerfederpaket und zum Fixieren des Tellerfederpakets gemäß Anspruch 1 ein, das insbesondere bei der Wartung von Gasturbinen vorteilhaft verwendet werden kann.

Das Set umfasst eine Gussschraube die gegenüber bekannten Gussschrauben den Vorteil besitzt, bereits eine Bohrung aufzuweisen, die durch Abschrauben des Gussschraubenkopfes einfach zugänglich gemacht werden kann. Eine solche Gussschraube kann im Rahmen des erfindungsgemäßen Verfahrens vorteilhaft eingesetzt werden.

Die Vorrichtung kann als Werkzeug verwendet werden, um das Tellerfederpaket einer Hitzeschildplatte einer Gasturbine zu fixieren. Dazu kann die Vorrichtung in der ersten Betriebsposition mit dem Kopfbereich voran durch eine Bohrung in der eingeschraubten Gussschraube gesteckt werden, wobei die Bohrung einen größeren Durchmesser als den ersten maximalen Durchmesser der Vorrichtung und einen kleineren Durchmesser als den zweiten maximalen Durchmesser der Vorrichtung aufweisen sollte. Befindet sich der Kopfbereich hinter dem Tellerfederpaket, kann die Betätigungsvorrichtung ausgelöst werden, woraufhin die Vorrichtung in die zweite Betriebsposition überführt wird. Durch Heraus- beziehungsweise Anziehen der Vorrichtung kann nun aufgrund des größeren zweiten maximalen Durchmessers des Kopfbereichs der Vorrichtung rückseitig ein Anpressdruck auf das Tellerfederpaket ausgeübt werden, ohne dass die Rückseite des Aufbaus zugänglich gemacht werden müsste. Die Gussschraube kann ausgeschraubt und über den Schaft der Vorrichtung abgezogen werden. Gegebenenfalls können die Hitzeschildplatte und/oder die Gussschraube anschließend ersetzt werden, wonach die Vorrichtung wieder entfernt werden kann.

Vorzugsweise kann hierfür der Kopfbereich des Schaftes in einer dritten Betriebsposition einen dritten maximalen Durchmesser quer zu der Längsachse des Schaftes aufweisen, der kleiner als der zweite maximale Durchmesser ist. Die Betätigungsvorrichtung ist in diesem Fall dazu ausgebildet, den Kopfbereich von der zweiten Betriebsposition in die dritte Betriebsposition zu überführen. Diese Ausführungsform der erfindungsgemäßen Vorrichtung erleichtert das Herausziehen der Vorrichtung durch eine Bohrung mit einem kleineren Durchmesser als der zweite maximale Durchmesser des Kopfbereichs der Vorrichtung.

Besonders bevorzugt verfügt die Vorrichtung über wenigstens einen in dem Kopfbereich des Schaftes angeordneten Schwenkarm. Die Betätigungsvorrichtung ist dabei mit dem wenigstens einen Schwenkarm verbunden oder verbindbar und dazu ausgebildet, den wenigstens einen Schwenkarm zu schwenken, so dass in der ersten Betriebsposition das Vektorprodukt eines entlang der Längsachse des Schwenkarms ausgerichteten ersten Einheitsvektors mit einem entlang einer Längsachse des Schaftes ausgerichteten zweiten Einheitsvektor einen ersten Betrag und in der zweiten Betriebsposition das Vektorprodukt des ersten Einheitsvektors mit dem zweiten Einheitsvektor einen zweiten Betrag, welcher größer als der erste Betrag ist, besitzt.

Diese Ausführungsform der Erfindung besitzt einen besonders einfachen Aufbau, der es ermöglicht, gegebenenfalls am Ort der zu inspizierenden oder wartenden Gasturbine eine erfindungsgemäße Vorrichtung bei Bedarf erst herzustellen.

Bei dieser Ausführungsform der Erfindung kann auch die dritte Betriebsposition vorgesehen sein. Dabei ist ein dritter Betrag des Vektorproduktes des ersten Einheitsvektors mit dem zweiten Einheitsvektor in der dritten Betriebsposition kleiner als der zweite Betrag. Vorzugsweise ist dabei der wenigstens eine Schwenkarm in der dritten Betriebsposition näherungsweise antiparallel zu der ersten Betriebsposition ausgerichtet. Das heißt, dass der wenigstens eine Schwenkarm zwischen der ersten Betriebsposition und der dritten Betriebsposition einen stumpfen Winkel bildet.

Alle Ausführungsformen mit wenigstens einem Schwenkarm umfassen bevorzugterweise zwei in dem Kopfbereich des Schaftes angeordnete Schwenkarme, welche in der zweiten Betriebsposition auf einander gegenüberliegenden Seiten des Schaftes von dem Schaft abstehen. Die Verwendung von zwei einander gegenüberliegenden Schwenkarmen bietet eine ausreichende Sicherung der Vorrichtung gegen versehentliches Herausrutschen aus der Bohrung bei gleichzeitig geringem Aufwand. Es können allerdings auch mehr als zwei Schwenkarme vorgesehen sein.

Bei einer besonders vorteilhaften Ausführung der Erfindung umfasst der Schaft ein Außenrohr. Die Betätigungsvorrichtung ist dabei als eine in dem Außenrohr angeordnete und entlang der Längsachse des Außenrohres verschiebbare Stange ausgebildet.

Bei einer Weiterbildung dieser Ausführungsform sind zwei Schwenkarme vorgesehen, die um jeweils ein an dem Außenrohr oder an der verschiebbaren Stange angeordnetes Scharnier schwenkbar sind.

Ein zweiter Erfindungsaspekt führt ein Verfahren zum Austauschen einer Hitzeschildplatte einer Gasturbine ein. Zu Beginn des Verfahrens wird eine Bohrung in einer Gussschraube, welche durch die Hitzeschildplatte in ein Tellerfederpaket eingeschraubt ist, zugänglich gemacht. Anschließend wird die Vorrichtung zum Fixieren des Tellerfederpakets des erfindungsgemäßen Sets durch die Bohrung eingesteckt, wobei die Vorrichtung sich in der ersten Betriebsposition befindet. Nach dem Einstecken wird der Kopfbereich des Schaftes der Vorrichtung durch Auslösen der Betätigungsvorrichtung von der ersten Betriebsposition in die zweite Betriebsposition überführt, woraufhin das Tellerfederpaket fixiert werden kann. Dies kann beispielsweise durch Ausüben eines Anpressdrucks geschehen. Da das Tellerfederpaket nun fixiert ist und auch bei entnommener Gussschraube nicht in das Innere der Gasturbine fallen kann, kann die Gussschraube gefahrlos entnommen werden. Wird die Hitzeschildplatte nicht mehr durch die Gussschraube gehalten, kann sie ausgetauscht werden, was dadurch geschehen kann, dass sie über den Schaft der Vorrichtung abgezogen und eine neue Hitzeschildplatte über den Schaft der Vorrichtung aufgezogen wird. Anschließend kann die Gussschraube oder eine Austauschgussschraube durch die ausgetauschte Hitzeschildplatte in das Tellerfederpaket eingeschraubt werden. Zum Abschluss des Verfahrens wird die Vorrichtung herausgezogen und die Bohrung in der Gussschraube oder der Austauschgussschraube verschlossen.

Bei einer Variante des erfindungsgemäßen Verfahrens kann die Vorrichtung vor dem Herausziehen der Vorrichtung in die dritte Betriebsposition überführt werden.

Dort, wo eine herkömmliche Gussschraube vorgefunden wird, kann eine Bohrung in die Gussschraube gebohrt werden. In diesem Fall sollte die durchbohrte Gussschraube durch eine erfindungsgemäße zweiteilige Gussschraube ausgetauscht werden.

Die Erfindung wird nachfolgend anhand von Abbildungen von Ausführungsbeispielen näher beschrieben. Gleiche Bezugszeichen bezeichnen dabei gleiche oder gleichartige Gegenstände, auf deren wiederholte Beschreibung gegebenenfalls verzichtet wird. Es zeigen:
- Fig. 1: eine herkömmliche Gussschraube;
- Fig. 2: ein erstes Ausführungsbeispiel einer erfindungsgemäßen Gussschraube;
- Fig. 3: ein zweites Ausführungsbeispiel einer erfindungsgemäßen Gussschraube;
- Fig. 4: ein drittes Ausführungsbeispiel einer erfindungsgemäßen Gussschraube;
- Fig. 5: eine erfindungsgemäße Vorrichtung in einer ersten Betriebsposition;
- Fig. 6: eine erfindungsgemäße Vorrichtung in einer zweiten Betriebsposition; und
- Fig. 7: eine erfindungsgemäße Vorrichtung in einer dritten Betriebsposition.

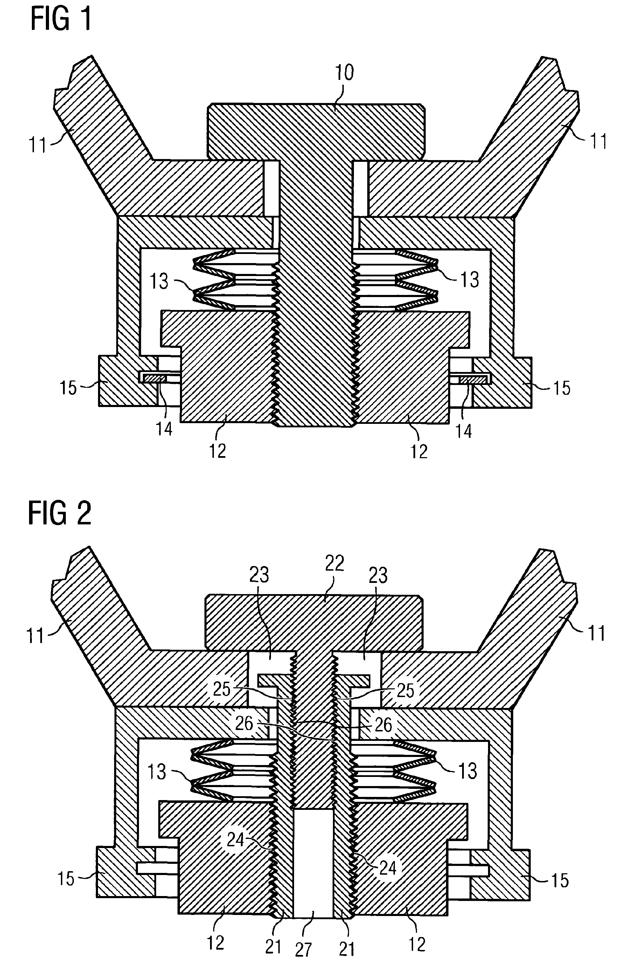

Fig. 1 zeigt eine herkömmliche Gussschraube 10 in einer Schnittdarstellung. Die Gussschraube 10 ist in eine Druckplatte 12 eingeschraubt und hält so eine Hitzeschildplatte 11 einer Gasturbine. Aufgrund der im Betrieb wegen der großen Hitze auftretenden Verspannungen wird die Hitzeschildplatte 11 nicht fest verschraubt, da andernfalls die Gefahr einer Beschädigung bestünde. Stattdessen wird ein hinreichender Anpressdruck durch eine Tellerfeder 13 sichergestellt, die sich jedoch, einer Ausdehnung oder Verformung der Gussschraube 10 oder der Hitzeschildplatte 11 folgend, zusammenziehen oder ausdehnen kann. Die Druckplatte 12 wird herkömmlich durch einen Sicherungsring 14, der in eine rückwärtige Haltestruktur 15 eingelassen ist gegen Herausfallen bei Entfernen der Gussschraube 10 gesichert. Ein solches Herausfallen der Druckplatte 12 hätte eine unerwünscht lange Betriebspause der Gasturbine zur Folge, da die Ringbrennkammer der Gasturbine aufwendig abgebaut werden müsste, um die herausgefallene Druckplatte 12 zu bergen. Die Erfindung schließt die Erkenntnis mit ein, dass ein solches Herausfallen der Druckplatte 12 unbedingt vermieden werden muss.

Fig. 2 zeigt ein erstes Ausführungsbeispiel einer erfindungsgemäßen Gussschraube. Erfindungsgemäß kann der Sicherungsring 14 von Fig. 1 entfallen, aber auch als zusätzliche Sicherungsmaßnahme zur Erfindung vorgesehen werden. Die Gussschraube der Erfindung umfasst eine Sicherungsbuchse 21, welche in die Druckplatte 12 eingeschraubt wird und diese in einem ersten Schritt gegen Herausfallen aus der Haltestruktur 15 sichert. Die Sicherungsbuchse 21 besitzt hierzu auf ihrer Außenseite ein Außengewinde 24. Außerdem weist die Sicherungsbuchse 21 entlang ihrer Längs- bzw. Rotationsachse (vertikal im Bild) eine Bohrung 27 auf, die einen Durchlass durch die Sicherungsbuchse 21 bietet. Auf einer Innenseite dieser Bohrung 27 ist ein Innengewinde 25 vorgesehen, in welches in einem nachfolgenden Schritt ein Gussschraubenkopf 22 eingeschraubt wird. Der Gussschraubenkopf 22 fixiert die Hitzeschildplatte 11 und leitet den von der Tellerfeder 13 ausgeübten Anpressdruck auf diese über. Ein Zwischenraum 23 bietet einen vertikalen Abstand zwischen dem dem Gussschraubenkopf 22 zugewandten Ende der Sicherungsbuchse 21 und einer Auflagefläche des Gussschraubenkopfes 22 sowie zwischen dem erwähnten Ende der Sicherungsbuchse 21 und einer Auflagefläche der Haltestruktur 15, welcher das angesichts der thermischen Ausdehnung im Betrieb vorteilhafte Spiel der Komponenten sicherstellt. Der Zwischenraum 23 erstreckt sich aus denselben Gründen vorteilhafterweise auch in im Bild horizontaler Richtung zwischen der Hitzeschildplatte 11 einerseits und der Sicherungsbuchse 21 und dem Gussschraubenkopf 22 andererseits.

Die Bohrung 27 in der Sicherungsbuchse 21 der Gussschraube der Fig. 2 kann durch Entfernen des Gussschraubenkopfes einfach zugänglich gemacht werden, wodurch die Druckplatte für einen Austausch der Gussschraube oder der Hitzeschildplatte 11 rückseitig für die als erster Erfindungsaspekt beschriebene Vorrichtung zugänglich wird. Die Vorrichtung kann in ihrer ersten Betriebsposition durch die Bohrung 27 eingeführt werden und die Druckplatte 11 nach Überführen in die zweite Betriebsposition von hinten gegen ein Herausfallen sichern. Die Sicherungsbuchse 21 und/oder die Hitzeschildplatte 11 können über die Vorrichtung abgezogen, untersucht und gegebenenfalls ausgetauscht werden.

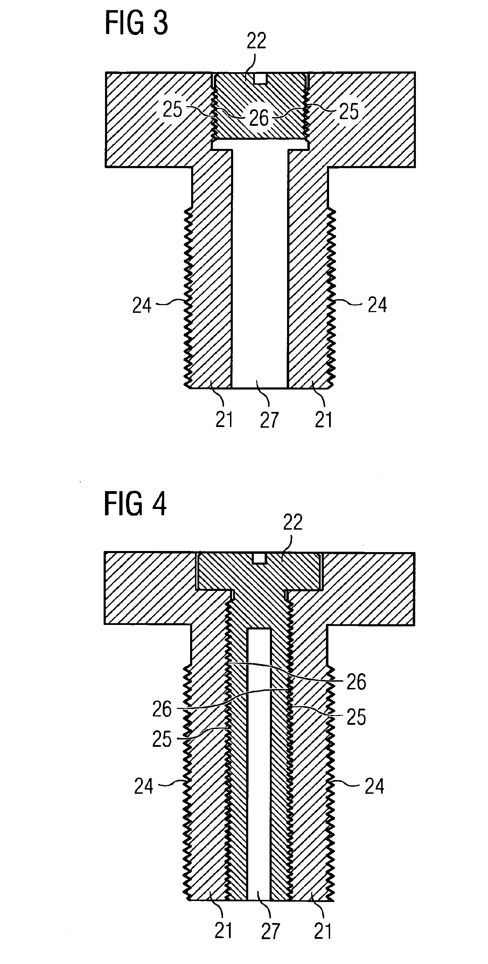

Fig. 3 zeigt ein zweites Ausführungsbeispiel einer Gussschraube des erfindungsgemäßen Sets. Bei der zweiten Ausführungsform der Gussschraube ist der Gussschraubenkopf 22 gegenüber dem Beispiel der Fig. 2 verkleinert ausgeführt und kann vollständig oder wenigstens zu überwiegendem Teil in die Sicherungsbuchse 21 eingeschraubt werden. Die Sicherungsbuchse 21 weist im Unterschied zu dem Beispiel von Fig. 2 einen Kopf auf, der es ermöglicht, bei installierter Gussschraube die Sicherungsbuchse 21 durch Halten an dem Kopf während des Herausschraubens des Gussschraubenkopfes 22 gegen ein versehentliches Herausschrauben wegen eines schwergängigen Gewindes 25 oder 26 zu sichern, bevor die erfindungsgemäße Vorrichtung zum Sichern der Druckplatte 12 durch die Bohrung 27 eingeführt werden kann.

Fig. 4 zeigt ein drittes Ausführungsbeispiel einer Gussschraube gemäß dem Set nach der Erfindung. Bei diesem Ausführungsbeispiel kann der Gussschraubenkopf 22 ebenfalls vollständig in die Sicherungsbuchse 21 eingeschraubt werden, besitzt aber einen Kopf, der einen größeren Durchmesser als den der Bohrung 27 aufweist. Als weiteren Unterschied, der jedoch auch separat von dem vorgenannten verwirklicht werden kann, besitzt der Gussschraubenkopf 22 der Fig. 4 einen Schaft, der näherungsweise die gleiche Länge wie die Bohrung 27 besitzen kann. In diesen Schaft kann jedoch eine Kühlungsbohrung eingebracht sein (siehe Fig. 4), die den Gussschraubenkopf 22 jedoch nicht vollständig durchmisst, da andernfalls der Gussschraubenkopf 22 die Bohrung 27 nicht abdichten könnte.

Insbesondere bei den Ausführungsbeispielen der erfindungsgemäßen Gussschrauben von den Figuren 3 und 4 können die Gussschraubenköpfe außerdem eine Nut zum Ansetzen eines Schraubwerkzeuges aufweisen. Beispiele hierfür sind Innensechskant, Kreuzschlitze und dergleichen. Eine solche Nut ist vorteilhaft, weil andernfalls der Gussschraubenkopf aufgrund des geringen oder gar fehlenden Überstandes über die Sicherungsbuche 21 nur schwierig entfernt werden kann. Es ist aber auch vorstellbar, den äußeren Rand des Gussschraubenkopfes 22 kantig auszuführen und den Gussschraubenkopf 22 so zu dimensionieren, dass er über die Sicherungsbuchse 21 herausragt, damit er mit einem Schraubenschlüssel oder einer Zange gegriffen werden kann.

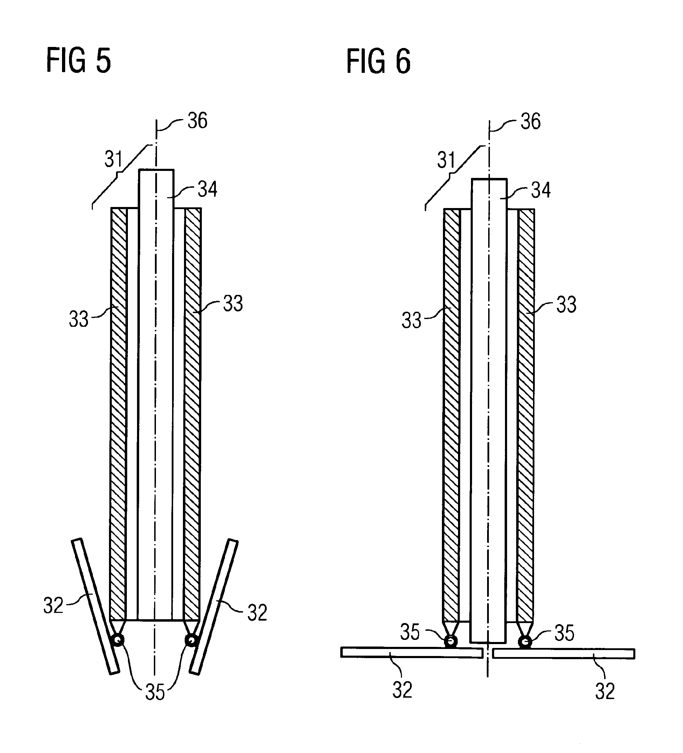

Fig. 5 zeigt eine Vorrichtung zum Fixieren aus dem erfindungsgemäßen Set in einer ersten Betriebsposition. Das Ausführungsbeispiel der Vorrichtung besitzt einen stabförmigen Schaft, der sich entlang einer Längsachse 36 erstreckt und im Wesentlichen aus einem Außenrohr 33 gebildet wird, das vorzugsweise zylindrisch ausgeführt ist. Im Inneren des Außenrohres 33 ist eine verschiebbare Stange 34 vorgesehen, die gemeinsam mit dem Außenrohr 33 die Funktion einer Betätigungsvorrichtung 31 übernimmt. Die Funktionsweise der Betätigungsvorrichtung 31 im gezeigten Ausführungsbeispiel der Vorrichtung nach der Erfindung wird nachfolgend aus der Zusammenschau der Beschreibung der Figs. 5, 6 und 7 deutlich werden.

Im in der Fig. 5 unten dargestellten Kopfbereich der Vorrichtung sind Scharniere 35 angeordnet, welche im gezeigten Beispiel mit dem Außenrohr 33 verbunden sind. Es sind jedoch auch alternative Anordnungen vorstellbar, bei denen die Scharniere 35 mit der Stange 34 verbunden sind. An den Scharnieren 35 sind jeweils Schwenkarme 32 befestigt, welche um die Scharniere 35 schwenken können. Die Stange 34 kann den Winkelbereich, um den die Schwenkarme 32 schwenken können, einschränken, wobei die Einschränkung davon abhängt, wie weit die Stange 34 innerhalb des Außenrohres 33 verschoben wird. In der in Fig. 5 gezeigten ersten Betriebsposition besitzt die Vorrichtung einen verhältnismäßig geringen Querdurchmesser und lässt sich durch die Bohrung 27 der erfindungsgemäßen Gussschraube einführen.

Fig. 6 zeigt eine erfindungsgemäße Vorrichtung in einer zweiten Betriebsposition, in der die Schwenkarme 32 nach außen geschwenkt sind und so den Querdurchmesser der Vorrichtung vergrößern, wodurch die Vorrichtung nicht aus der Bohrung 27 der erfindungsgemäßen Gussschraube herausgezogen werden kann. In der zweiten Betriebsposition kann die Druckplatte 12 durch Zurückziehen der Vorrichtung aus der Bohrung 27 gegen die Tellerfeder 13 gedrückt und so gegen ein Herausfallen gesichert werden.

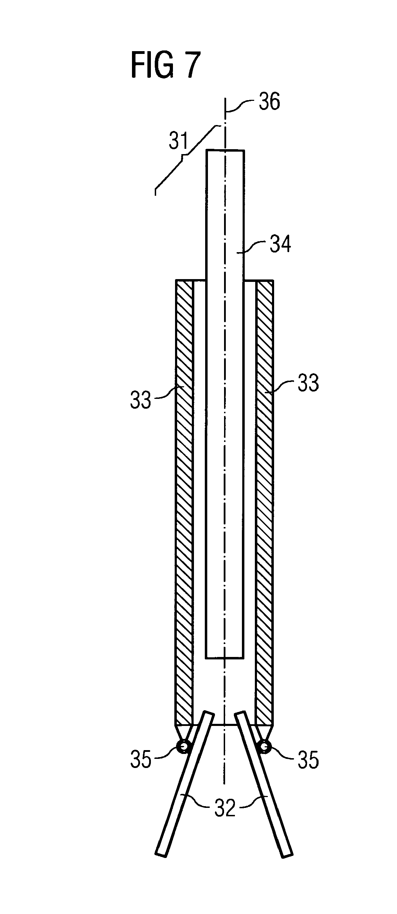

Fig. 7 zeigt eine erfindungsgemäße Vorrichtung in einer dritten Betriebsposition. In der dritten Betriebsposition ist die Stange 34 ein Stück weit aus dem Außenrohr 33 herausgezogen, so dass die Schwenkarme 32 weiter schwenken können als in der zweiten Betriebsposition. Hierdurch verringert sich der Querdurchmesser der Vorrichtung wiederum, wodurch sie aus der Bohrung 37 herausgezogen werden kann.

Bei der gezeigten Ausführungsform der erfindungsgemäßen Vorrichtung sind die Schwenkarme 32 in der dritten Betriebsposition näherungsweise antiparallel zu der ersten Betriebsposition ausgerichtet, wodurch sich die Vorrichtung leichter aus der Bohrung 27 herausziehen lässt. Es ist jedoch auch vorstellbar, dass die Schwenkarme 32 in der dritten Betriebsposition eine zu der ersten Betriebsposition identische Ausrichtung einnehmen.

Bei allen Ausführungsformen der Vorrichtung mit Stange 34 kann die Stange 34 mit den Schwenkarmen 32 verbunden sein, beispielsweise über einen Seilzug oder ein biegsames Blech. Außerdem können Markierungen oder Einrastungen an der Stange 34 vorgesehen sein, die eine für eine jeweilige Betriebsposition benötigte Verschiebung zwischen dem Außenrohr 33 und der Stange 34 anzeigen beziehungsweise in einer solchen einrasten können.

Obwohl die Erfindung im Detail durch Ausführungsbeispiele von bevorzugten Ausführungsformen näher illustriert und beschrieben wurde, ist die Erfindung nicht durch die offenbarten Beispiele eingeschränkt. Variationen der Erfindung können vom Fachmann aus den gezeigten Ausführungsbeispielen abgeleitet werden, ohne den Schutzumfang der Erfindung, wie er in den Ansprüchen definiert wird, zu verlassen.

## Patentansprüche

1. Set zum lösbaren Befestigen einer Hitzeschildplatte einer Gasturbine an einem Tellerfederpaket (12, 13) und zum Fixieren des Tellerfederpakets (12, 13), umfassend eine Gussschraube (21, 22), die Gussschraube (21, 22) aufweisend eine Sicherungsbuchse (21), welche auf einer Außenoberfläche ein erstes Außengewinde (24) und auf einer entlang einer Längsachse der Außenoberfläche durch die Sicherungsbuchse (21) hindurch verlaufenden Bohrung (27) ein Innengewinde (25) besitzt, und einen Gussschraubenkopf (22), welcher einen in das Innengewinde (25) einschraubbares zweites Außengewinde (26) aufweist und ausgebildet ist, die Bohrung (27) durch die Sicherungsbuchse (21) zu verschließen, das Set weiter umfassend eine Vorrichtung zum Fixieren des Tellerfederpaketes (12, 13) einer Gasturbine, die Vorrichtung aufweisend einen stabförmigen Schaft mit einem Kopfbereich und einem Fußbereich und einer in dem Fußbereich des Schaftes angeordneten Betätigungsvorrichtung (34), wobei der Kopfbereich des Schaftes in einer ersten Betriebsposition einen ersten maximalen Durchmesser quer zu einer Längsachse des Schaftes und in einer zweiten Betriebsposition einen zweiten maximalen Durchmesser quer zu der Längsachse des Schaftes aufweist, wobei der zweite maximale Durchmesser größer als der erste maximale Durchmesser ist und wobei die Betätigungsvorrichtung (34) ausgebildet ist, durch einen Benutzer ausgelöst zu werden und bei Auslösung durch den Benutzer den Kopfbereich von der ersten Betriebsposition in die zweite Betriebsposition zu überführen, **dadurch gekennzeichnet, dass** die Bohrung (27) einen größeren Durchmesser als den ersten maximalen Durchmesser der Vorrichtung zum Fixieren des Tellerfederpaketes (12, 13) und einen kleineren Durchmesser als den zweiten maximalen Durchmesser der Vorrichtung aufweist.

2. Set des vorhergehenden Anspruchs, bei der der Kopfbereich des Schaftes in einer dritten Betriebsposition einen dritten maximalen Durchmesser quer zu der Längsachse des Schaftes aufweist, der kleiner als der zweite maximale Durchmesser ist, wobei die Betätigungsvorrichtung (34) ausgebildet ist, den Kopfbereich von der zweiten Betriebsposition in die dritte Betriebsposition zu überführen.

3. Set eines der vorhergehenden Ansprüche, mit wenigstens einem in dem Kopfbereich des Schaftes angeordneten Schwenkarm (32), wobei die Betätigungsvorrichtung (34) mit dem wenigstens einen Schwenkarm (32) verbunden oder verbindbar und dazu ausgebildet ist, den wenigstens einen Schwenkarm (32) zu schwenken, so dass in der ersten Betriebsposition das Vektorprodukt eines entlang der Längsachse des Schwenkarms ausgerichteten ersten Einheitsvektors mit einem entlang einer Längsachse des Schaftes ausgerichteten zweiten Einheitsvektor einen ersten Betrag und in der zweiten Betriebsposition das Vektorprodukt des ersten Einheitsvektors mit dem zweiten Einheitsvektor einen zweiten Betrag, welcher größer als der erste Betrag ist, besitzt.

4. Set der beiden vorhergehenden Ansprüche, bei der ein dritter Betrag des Vektorproduktes des ersten Einheitsvektors mit dem zweiten Einheitsvektor in der dritten Betriebsposition kleiner als der zweite Betrag ist.

5. Set eines der vorhergehenden Ansprüche, bei der in dem Kopfbereich des Schaftes zwei Schwenkarme (32) angeordnet sind, welche in der zweiten Betriebsposition auf einander gegenüberliegenden Seiten des Schaftes von dem Schaft abstehen.

6. Set eines der vorhergehenden Ansprüche, bei der der Schaft ein Außenrohr (33) umfasst und die Betätigungsvorrichtung (34) als eine in dem Außenrohr angeordnete und entlang der Längsachse des Außenrohres (33) verschiebbare Stange (34) ausgebildet ist.

7. Set der beiden vorhergehenden Ansprüche, bei der die zwei Schwenkarme (32) um jeweils ein an dem Außenrohr oder an der verschiebbaren Stange angeordnetes Scharnier (35) schwenkbar sind.

8. Ein Verfahren zum Austauschen einer Hitzeschildplatte (11) einer Gasturbine mit den folgenden Schritten:
- Zugänglichmachen einer Bohrung (27) in einer Gussschraube (10; 21, 22), welche durch die Hitzeschildplatte (11) in ein Tellerfederpaket (12, 13) eingeschraubt ist;
- Einstecken der Vorrichtung eines der vorhergehenden Ansprüche durch die Bohrung (27), wobei die Vorrichtung sich in der ersten Betriebsposition befindet;
- Überführen des Kopfbereichs des Schaftes der Vorrichtung von der ersten Betriebsposition in die zweite Betriebsposition durch Auslösen der Betätigungsvorrichtung (34);
- Fixieren des Tellerfederpaketes (12, 13);
- Entnehmen der Gussschraube (10; 21, 22);
- Austauschen der Hitzeschildplatte (11);
- Einschrauben der Gussschraube (21, 22) oder einer Austauschgussschraube (21, 22) durch die ausgetauschte Hitzeschildplatte (11) in das Tellerfederpaket (12, 13);
- Herausziehen der Vorrichtung; und
- Verschließen der Bohrung (27) in der Gussschraube (21, 22) oder der Austauschgussschraube (21, 22).

9. Das Verfahren des vorhergehenden Anspruchs, bei dem die Vorrichtung des Sets gemäß Anspruch 2 ausgebildet ist und vor dem Herausziehen der Vorrichtung in die dritte Betriebsposition überführt wird.

## Claims

1. Set for releasably attaching a heat shield plate of a gas turbine to a Belleville washer stack (12, 13) and for securing the Belleville washer stack (12, 13), comprising a cast screw (21, 22), the cast screw (21, 22) having a securing bushing (21) which possesses on an external surface a first external thread (24) and on a bore (27) running through the securing bushing (21) along a longitudinal axis of the external surface an internal thread (25), and a cast screw head (22) which has a second external thread (26) that can be screwed into the internal thread (25) and is designed to close the bore (27) through the securing bushing (21), the set further comprising a device for securing the Belleville washer stack (12, 13) of a gas turbine, the device having a rod-shaped shaft with a head region and a foot region and an actuation device (34) arranged in the foot region of the shaft, wherein the head region of the shaft has, in a first operating position, a first maximum diameter transversely to a longitudinal axis of the shaft and, in a second operating position, a second maximum diameter transversely to the longitudinal axis of the shaft, wherein the second maximum diameter is greater than the first maximum diameter and wherein the actuation device (34) is designed to be activated by a user and, when activated by the user, to move the head region from the first operating position into the second operating position, **characterized in that** the diameter of the bore (27) is greater than the first maximum diameter of the device for securing the Belleville washer stack (12, 13) and is smaller than the second maximum diameter of the device.

2. Set according to the preceding claim, in which the head region of the shaft has, in a third operating position, a third maximum diameter transversely to the longitudinal axis of the shaft, which is smaller than the second maximum diameter, wherein the actuation device (34) is designed to move the head region from the second operating position into the third operating position.

3. Set according to either of the preceding claims, having at least one pivot arm (32) arranged in the head region of the shaft, wherein the actuation device (34) is connected or can be connected to the at least one pivot arm (32) and is designed to pivot the at least one pivot arm (32) such that in the first operating position the vector product of a first unit vector oriented along the longitudinal axis of the pivot arm with a second unit vector oriented along a longitudinal axis of the shaft has a first value and in the second operating position the vector product of the first unit vector with the second unit vector has a second value which is greater than the first value.

4. Set according to the two preceding claims, in which a third value of the vector product of the first unit vector with the second unit vector in the third operating position is less than the second value.

5. Set according to one of the preceding claims, in which in the head region of the shaft there are arranged two pivot arms (32) which in the second operating position project from the shaft on mutually opposite sides of the shaft.

6. Set according to one of the preceding claims, in which the shaft comprises an outer tube (33) and the actuation device (34) takes the form of a rod (34) which is arranged in the outer tube and can be displaced along the longitudinal axis of the outer tube (33).

7. Set according to the two preceding claims, in which the two pivot arms (32) can each be pivoted about a hinge (35) arranged on the outer tube or on the displaceable rod.

8. Method for replacing a heat shield plate (11) of a gas turbine having the following steps:
- making accessible a bore (27) in a cast screw (10; 21, 22) which is screwed through the heat shield plate (11) into a Belleville washer stack (12, 13);
- inserting the device according to one of the preceding claims through the bore (27), wherein the device is in the first operating position;
- moving the head region of the shaft of the device from the first operating position into the second operating position by activating the actuation device (34);
- securing the Belleville washer stack (12, 13);
- removing the cast screw (10; 21, 22);
- replacing the heat shield plate (11);
- screwing in the cast screw (21, 22) or a replacement cast screw (21, 22) through the replaced heat shield plate (11) into the Belleville washer stack (12, 13);
- withdrawing the device; and
- closing the bore (27) in the cast screw (21, 22) or the replacement cast screw (21, 22).

9. Method according to the preceding claim, in which the device of the set is designed according to Claim 2 and is moved into the third operating position prior to withdrawal of the device.

## Revendications

1. Kit de fixation amovible d'un panneau de bouclier thermique d'une turbine à gaz sur un paquet ( 12, 13 ) de ressorts à disque et pour immobiliser le paquet ( 12, 13 ) de ressorts à disque, comprenant un boulon ( 21, 22 ) en fonte, le boulon ( 21, 22 ) en fonte ayant une douille ( 21 ) d'assujettissement, qui a un premier filetage sur une surface extérieure et un taraudage ( 25 ) sur un alésage ( 27 ) s'étendant le long d'un axe longitudinal de la surface extérieure à travers la douille ( 21 ) d'assujettissement et une tête ( 22 ) de boulon en fonte, qui a un deuxième filetage ( 26 ) pouvant se visser dans le taraudage ( 25 ) et qui est constituée pour fermer l'alésage ( 27 ) dans la douille ( 21 ) d'assujettissement, le kit comprenant en outre un dispositif d'immobilisation du paquet ( 12, 13 ) de ressorts à disque d'une turbine à gaz, le dispositif ayant une tige en forme de barre ayant une partie de tête et une partie de pied et un dispositif ( 34 ) d'actionnement disposé dans la partie de pied de la tige, la partie de tête de la tige ayant, dans une première position de fonctionnement, un premier diamètre maximum transversalement à un axe longitudinal de la tige, et dans une deuxième position de fonctionnement, un deuxième diamètre maximum transversalement à l'axe longitudinal de la tige, le deuxième diamètre maximum étant plus grand que le premier diamètre maximum et le dispositif ( 34 ) d'actionnement est constitué pour être déclenché par un utilisateur et pour, au déclenchement par l'utilisateur, faire passer la partie de tête de la première position à la deuxième position de fonctionnement, **caractérisé en ce que** l'alésage ( 27 ) a un diamètre plus grand que le premier diamètre maximum du dispositif d'immobilisation du paquet ( 12, 13 ) de ressorts à disque et un diamètre plus petit que le deuxième diamètre maximum du dispositif.

2. Kit de la revendication précédente, dans lequel la partie de tête de la tige a, dans une troisième position de fonctionnement, un troisième diamètre maximum transversalement à l'axe longitudinal de la tige qui est plus petit que le deuxième diamètre maximum, le dispositif ( 34 ) d'actionnement étant constitué pour faire passer la partie de tête de la deuxième position de fonctionnement à la troisième position de fonctionnement.

3. Kit de l'une des revendications précédentes, comprenant au moins un bras ( 32 ) pivotant monté dans la partie de tête de la tige, le dispositif ( 34 ) d'actionnement étant relié au au moins un bras ( 32 ) pivotant ou pouvant l'être et étant constitué à cet effet pour faire pivoter le au moins un bras ( 32 ) pivotant de manière à ce que, dans la première position de fonctionnement, le produit vectoriel d'un premier vecteur unitaire, dirigé suivant l'axe longitudinal du bras pivotant, par un deuxième vecteur unitaire, dirigé suivant un axe longitudinal de la tige, ait un premier module et, dans la deuxième position de fonctionnement, le produit vectoriel de premier vecteur unitaire par le deuxième vecteur unitaire ait un deuxième module qui est plus grand que le premier module.

4. Kit des deux revendications précédentes, dans lequel un troisième module du produit vectoriel du premier vecteur unitaire par le deuxième vecteur unitaire est, dans la troisième position de fonctionnement, plus petit que le deuxième module.

5. Kit de l'une des revendications précédentes, dans lequel il est monté, dans la partie de tête de la tige, deux bras ( 32 ) pivotants qui, dans la deuxième position de fonctionnement, sont écartés de la tige sur des côtés opposés l'un à l'autre de la tige.

6. Kit de l'une des revendications précédentes, dans lequel la tige comprend un tuyau ( 33 ) extérieur et le dispositif ( 34 ) d'actionnement est constitué sous la forme d'une barre ( 34 ) disposée dans le tuyau extérieur et coulissant le long de l'axe longitudinal du tuyau ( 3 ) extérieur.

7. Kit des deux revendications précédentes, dans lequel les deux bras ( 32 ) pivotants peuvent pivoter respectivement autour d'une charnière ( 35 ) montée sur le tuyau extérieur ou sur la barre coulissante.

8. Procédé de remplacement d'un panneau de bouclier thermique d'une turbine à gaz, comprenant les stades suivants :
- on rend accessible un alésage ( 27 ) d'un boulon ( 10, 21, 22 ) en fonte, qui est vissé à travers le panneau ( 11 ) de bouclier thermique dans un paquet ( 12, 13 ) de ressorts à disque,
- on enfile le dispositif suivant l'une des revendications précédentes dans l'alésage ( 27 ), le dispositif se trouvant dans la première position de fonctionnement,
- on fait passer la partie de tête de la tige du dispositif de la première position de fonctionnement à la deuxième position de fonctionnement en déclenchant le dispositif ( 34 ) d'actionnement,
- on immobilise le paquet ( 12, 13 ) de ressorts à disque,
- on retire le boulon ( 10, 21, 22 ) en fonte,
- on remplace le panneau de bouclier thermique,
- on boulonne le boulon ( 21, 22 ) en fonte ou un boulon ( 21, 22 ) en fonte de remplacement à travers le panneau ( 11 ) de bouclier thermique remplacé dans le paquet ( 12, 13 ) de ressorts à disque,
- on retire le dispositif et
- on ferme l'alésage ( 27 ) du boulon ( 21, 22 ) en fonte ou du boulon ( 21, 22 ) en fonte de remplacement.

9. Procédé suivant la revendication précédente dans lequel le dispositif du kit est constitué suivant la revendication 2 et avant de retirer le dispositif, on le fait passer dans la troisième position de fonctionnement.
